# EUROPEAN PATENT APPLICATION

(11) **EP 0 921 457 A2**
(43) Date of publication of application: **09.06.1999**
(21) Application number: 98309571.2
(22) Date of filing: 23.11.1998
(51) Int. Cl.: G05D 23/19, F16K 31/00

(54) **Fluid flow control valve actuator**

(30) Priority: 22.11.1997 GB 9724646; 26.03.1998 GB 9806327
(71) Applicant: Carver plc, Brownhills, Walsall, West Midlands WS8 7ES (GB)
(72) Inventor: Wright, Alan Thomas, Codsall Wood, Wolverhampton WV8 1RQ (GB)
(74) Representative: Skerrett, John Norton Haigh

(57) **Abstract**

An electrically operable actuator (50) suitable for actuating a water flow control valve (10) of a hot water central heating system has a hollow body (54) containing an arrangement of bimetallic discs (55,56) enclosing an electrical heating element (59). The bimetallic disc arrangement carries a movable abutment (63) engageable with an actuating member (53) of a radiator water flow control valve housed within a valve body (51) which is connected by a screw threaded collar to the actuator body (54). The actuator is remotely controllable by passing a current through the heating element (59) causing the bimetallic discs to flex against a bias spring (57) and displace the abutment (63) to operate the actuating member (53) and alter the setting of the flow control valve.

## Description

The present invention relates to actuators, particularly electrically-operated actuators, for actuating fluid flow control valves, and to fluid flow control valve assemblies incorporating such actuators.

The actuators of the present invention may be used with appropriate fluid flow control valves in a wide variety of fluid flow control applications, but one application of particular interest is that of their use in connection with thermostat radiator valves of water filled heat emitters or radiators of hot water central heating systems. For convenience, therefore, the invention will be described herein by way of non-limiting example with particular reference to such central heating systems and control systems therefor.

It is known to fit thermostatic radiator valves to water heated radiators to restrict the flow of heated water therethrough when the ambient air around the valve reaches a temperature at which the thermostatic valve has been set to react thereto; and it is also known to control a central heating boiler by means of a programmable timer to energise the boiler at pre-programmed times for pre-programmed periods, and by means of a room thermostat which overrides the program to de-energise the boiler when the room reaches a temperature at which the thermostat has been set to respond. However, all these means of control, even when used in combination involve problems and compromise. In particular, the heating control offered by such thermostatic radiator valves is subject to perturbations which commonly arise in the vicinity of such radiators, e.g. the valves may be subject to a cooling bias by a cold downdraught from a window above the radiator and valve, or by a heating bias by heat radiated onto the valve by the radiator, causing aberrant or belated or premature, actuation of the valve. Thus, the valve actuations suffer from perturbations caused by thermal influences on the environment in the vicinity of the radiator to which the valve is fitted, e.g. the thermostatic actuator of the valve can receive variable amounts of radiated, conducted and convected heat from the radiator and pipework, and can be cooled by draughts and air flows e.g. created by an updraught past the radiator.

In many instances the valves require a strong spring to provide an opening bias sufficient to prevent the valve sticking closed, and this bias must be overcome by the thermostatic actuator before the valve can be closed or the valve opening can be reduced.

Invariably, these problems result in some rooms being overheated or underheated, especially those rooms which have a pattern of occupancy which differs from that of the room in which the room thermostat is located.

Using modern technology it would be quite possible to design a multi-flow path hot water distribution system, e.g. using several selectively energisable pumps or distribution valves, controlled by a similar number of room thermostats so as to give selective heating of several individually selectable rooms, but the installation and equipment costs would probably be prohibitive or not cost effective for most customers.

Use of radiator water flow control valves and actuators in accordance with the present invention can provide a low-cost solution to the foregoing problems, especially insofar as there is envisaged a control system for a hot water central heating system employing water filled heat emitters, and a boiler to heat said water which boiler is energised via a suitable control such as a switch or programmable timer, the control system comprising:
a) at least one electrically actuated valve (i.e. a valve having an electrically controlled actuator) which can be fitted to one of the radiators to control the flow of hot water through the radiator, and
b) a programmable sensor or control unit to actuate the valve (e.g. energise and de-energise the actuator of the valve) via an electrical cable according to a plurality of predetermined parameters, the first one of which is temperature.

In such a system, the electrically actuated valve could be a remotely controllable solenoid valve or a motorised valve, but motorised valves are expensive and complex, and solenoid controlled valves require relatively heavy currents to provide sufficient force to overcome the aforementioned bias. What is needed, therefore, is a low energy consumption inexpensive actuator for such a remotely controllable valve. Such an actuator can be provided by the present invention.

According to the present invention, in a broad aspect there is provided an actuator, for a fluid flow control valve, characterised in that it is in the form of a hollow body containing a bimetallic device and also electrical heating means to heat the bimetallic device, said body being provided with connecting means to connect the actuator, in use, to said fluid flow control valve, said bimetallic device being operatively connected to an abutment member arranged to engage an actuating member of the fluid flow control valve to actuate the latter when, in use, the actuator is connected to the fluid flow control valve and when said electrical heating means is energised.

The body of the actuator preferably encloses bias means to urge the bimetallic device towards a predetermined position.

The bimetallic device preferably includes a plurality of dished bimetallic discs which peripherally abut the heater assembly. A pair of these discs is arranged to define therebetween a lenticular cavity in which a heating element of the heating means is located. The centre portion of one disc preferably carries the abutment and abuts a bias spring, and the centre portion of the other disc preferably abuts or bears against the body of the actuator. The discs are preferably formed so as to diverge and increase their curvature when heated.

The actuator of the invention together with the related control system is suitable for retro-fitting in existing central heating systems with very low labour costs and apparatus costs, so as to permit individual and independent control of the heating of individual rooms.

The temperature sensing performed by the sensor enables most of the effects of the thermal aberrations usual to the vicinity of radiators to be avoided, and the cost of hard wiring additional room thermostats back to the boiler programmable timer to be avoided, because the sensor can be plugged into any suitably disposed wall socket, or into a wander lead so that it can operate in a chosen position in the room.

The electrically controlled radiator valve actuator, can be substituted for any other form of radiator valve quite simply and inexpensively, or may be provided on a valve which is then fitted to an open flow radiator (a radiator without a flow control valve) to update the heating system, or a conversion kit including the actuator can be provided to enable a manually or thermostatically controlled valve to be modified for electrical actuation.

Where a room has several radiators, a single programmable sensor may control several of the electrically controlled radiator valve actuators.

The actuator of the invention can be driven by any form of, e.g. AC, DC or pulsed, electrical valve control output.

The invention will be described further, by way of example, with reference to the accompanying drawings, wherein:-
FIGURE 1 is a diagram which shows the arrangement, described in GB 2323938A, of a control system of a hot water central heating system that includes a flow control valve provided with an actuator of the invention,
FIGURE 2 shows a perspective view of the control unit of the control system, and
FIGURE 3 shows a schematic diagram of a valve actuator of the invention.

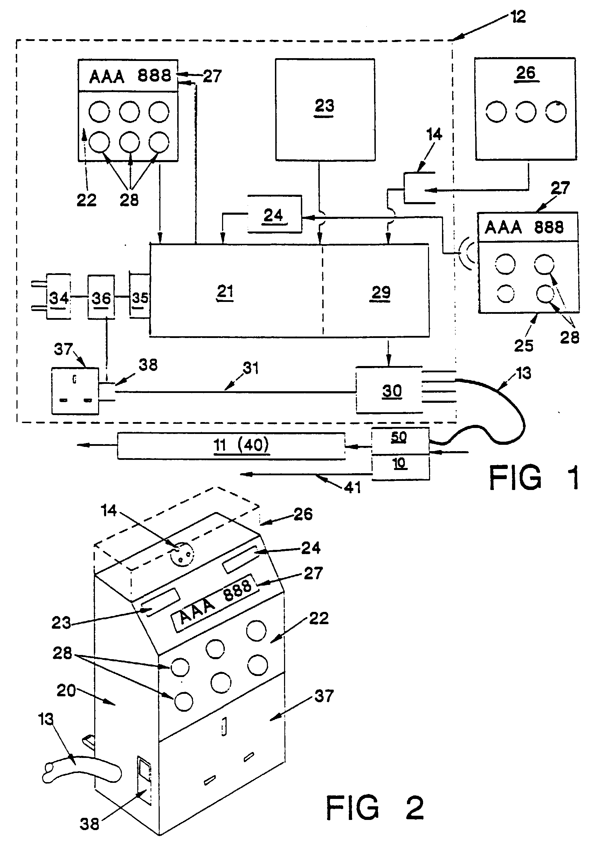

The control system represented in FIGURE 1 comprises an electrically actuated water flow control valve 10 to control the flow of water to a heat emitter 11, e.g. usually a radiator, and a control unit 12 to open and close the valve 10 via an electrical cable 13 and actuator 50.

The control unit 12 (shown also in FIGURE 2) comprises a housing 20 containing a programmer/controller microprocessor 21 (FIGURE 1), manually actuable input and setting means 22 and a temperature sensing means 23 to provide inputs to the microprocessor 21, and, optionally, a receiver 24 (to receive signals emitted by a manual remote control unit 25, FIGURE 1) and a room occupancy sensor 26 which can be integrated into the unit 12 or connected to the unit 12 by means of a socket 14 shown in FIGURE 2. The microprocessor 21 drives a display 27.

The input and setting means 22 provides buttons 28 for signalling the microprocessor 21, to input:-
(a) the day of the week e.g. the day to be programmed or the actual day,
(b) the "on" time of day and the "off" time of day for a heating period on the set day,
(c) further "on" and "off" times for further heating periods,
(d) the desired temperature to be achieved during each set period, and
(e) the current actual time and day of the week.

The day of the week may be simply represented by a sequence number of 1 to 7.

Insofar as the programming of the timing of the periods is concerned, the unit may employ technology known from 7 day programmable timers, which can be adapted to enable temperature settings to be correlated with each "on" period setting. The microprocessor causes the display 27 to indicate each input and setting during programming, and, after programming is completed, to show the actual day, the time, whether the heating is set "on" or "off", and the set and/or actual temperature.

During the "on" periods the microprocessor in this embodiment compares the desired set temperature with the actual room temperature sensed by the means 23, and, if the set temperature is above the actual temperature, electronically actuates a switch 30 to supply electrical power from line 31 to the cable 13. In an alternative arrangement the actual comparison is performed by a comparator 29 of the unit which compares set and actual temperature inputs (provided by the microprocessor and the means 23 respectively) to actuate the switch 30. Switching hysteresis or delay is preferably built into the system so that it does not "hunt" rapidly when the room temperature approximates to the set temperature to avoid repetitive operation of the valve 10.

The input and setting means 22 also provides buttons 28 for input of mode settings including an "off" setting to override but not alter the programmed settings, for input of an "auto" setting to return the unit to a state in which it resumes programmed operation, and for an "on" setting in which the valve is actuated to an open state, irrespective of the programmed "on" periods, e.g. when the actual temperature is below the set temperature to give continuous thermostatic control.

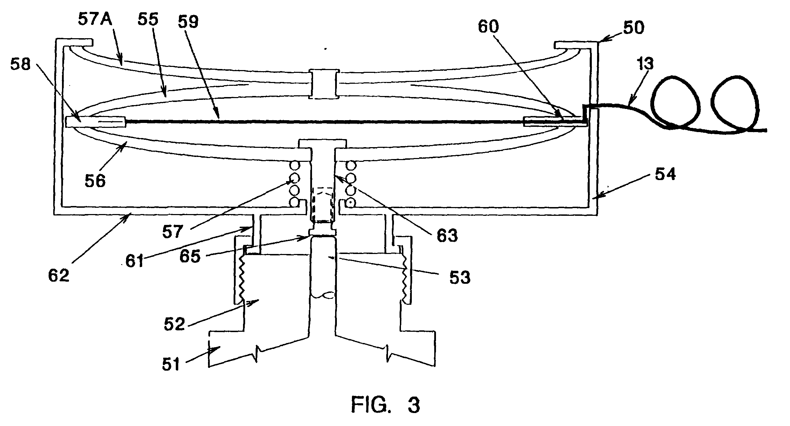

Referring to FIGURE 3, the actuator 50 serves as part of the electrically actuated water flow control valve 10 which is indicated partially in FIGURE 3 in broken lines. The valve has a body 51 with an upwardly open formation 52 around the actuating shaft or jumper 53 of the valve. The formation 52 is externally threaded.

The actuator 50 has a hollow body 54 in which two bimetallic discs 55 and 56 are located by a bias spring 57, so that peripheral portions of the discs 55 and 56 embrace a carrier 58 therebetween. The carrier 58 carries an electrical resistance wire heating element 59 and electrical connector leads 60 to which the electrical cable 13 is connected. The leads 60 are covered by the carrier or a cover plate thereon where they pass between the peripheral portions of the discs 55 and 56. A dished supplementary disc 57A may be fixed centrally to the top of the disc 55 so that the periphery of the disc 57A abuts the top of the body 54.

The body 54 has a downwardly open formation 61 projecting from its bottom wall 62, which formation 61 has an internally threaded collar 61A to connect with the formation 52 to connect together the valve and actuator bodies 51 and 54. An abutment member 63, mounted centrally on the disc 56, then extends through the formation 61 to engage the shaft or jumper 53 of the valve.

In this embodiment, each bimetal disc 55,56 is approximately 3 cm in diameter and 0.5 cm thick and gives a displacement of 0.4 mm with a thrust exceeding 3 Kgm when heated through a nominal actuation temperature range spanning across 30°C, which range (e.g. 50°C ± 20°C to 80°C ± 20°C) is set well above (e.g. at least 25°C) an unheated ambient temperature. The total working displacement of the abutment 63 produced by the oppositely curving discs 55 and 56 is almost 1.0 mm, which is sufficient to depress the jumper 53 from a valve fully open position to a valve closed position when the discs are heated to about 80°C to 100°C. Thermal flexing of the supplementary disc 57A increases this working displacement.

Operation of the actuator at temperatures well above ambient reduces the influences of changes in ambient temperature upon the actuator, and allows a gap 65 to exist between the abutment member 63 and the jumper 53 when the bimetallic device is cold, e.g. not heated by the heating device, so that deflections of the abutment produced by ambient temperature changes are not transmitted to the jumper 53.

The cold gap 65 can be adjusted by varying the effective length of the abutment member 63, which comprises an upper female threaded part and a lower male threaded part to permit such adjustment. However instead of, or in addition thereto, the depth of interengagement between the threaded formations 52,61 may be adjustable to vary the gap 65, and in this case detent or retaining means may be provided to hold the actuator body in a predetermined or selected position relative to the valve body. Such detent or retaining means would preferably be releasable to enable the body to be displaced further towards the valve in carrying out adjustments to close the valve or restrict the valve opening for any given state of the device.

The actuator body is preferably insulated or made of insulating material.

As already indicated, the actuator is preferably arranged so that the operational temperature range of the bimetallic discs is well above normal ambient temperature range.

The invention is not confined to details of the foregoing examples, and many variations and modifications are possible within the scope of the invention which provides and includes an actuator for various kinds of fluid flow control valves, not necessarily limited to control valves for thermostatically controlled central heating systems.

## Claims

1. An actuator, for a fluid flow control valve, characterised in that it is in the form of a hollow body containing a bimetallic device and also electrical heating means to heat the bimetallic device, said body being provided with connecting means to connect the actuator, in use, to said fluid flow control valve, said bimetallic device being operatively connected to an abutment member arranged to engage an actuating member of the fluid flow control valve to actuate the latter when, in use, the actuator is connected to the fluid flow control valve and when said electrical heating means is energised.

2. An actuator as claimed in Claim 2 wherein the body encloses bias means to urge the bimetallic device towards a predetermined position.

3. An actuator as claimed in Claim 1 or 2 wherein the bimetallic device includes a plurality of dished bimetallic discs which peripherally abut the heating means, and which are arranged to define therebetween a lenticular cavity in which a heating element of the heating means is located.

4. An actuator as claimed in Claim 3 wherein the centre portion of one disc carries the abutment member and abuts the bias spring, and the centre portion of a second disc abuts the actuator body or a supplementary disc.

5. An actuator as claimed in Claim 3 or 4 wherein the discs are formed so as to increase their curvature when heated.

6. An actuator as claimed in any one of Claims 3 to 5 wherein the heating means is provided by a heater assembly comprising a carrier having a peripheral portion embraced between a pair of said dished bimetallic discs.

7. An actuator as claimed in Claim 6 wherein said heating element is mounted on said carrier and extends across the carrier.

8. An actuator as claimed in any one of the preceding claims wherein said connecting means includes a screw threaded coupling member for engaging a threaded part of the fluid flow control valve.

9. An actuator as claimed in any one of the preceding claims wherein adjustment means are provided for altering the effective position of the abutment member relative to the actuator body.

10. A fluid flow control valve assembly comprising a fluid flow control valve in combination with an actuator as claimed in any of the preceding claims.

11. A fluid flow control valve assembly as claimed in Claim 10 wherein the fluid flow control valve is a thermostatic water valve.

12. A fluid flow control valve assembly as claimed in Claim 11 wherein the actuating member engaged by the abutment member of the actuator is a jumper or shaft of the water valve.

13. A central heating system having one or more water filled heater emitters or radiators provided with a flow control valve assembly as claimed in Claim 11 or 12.
